# EUROPEAN PATENT APPLICATION

(11) **EP 1 439 407 A1**
(43) Date of publication of application: **21.07.2004**
(21) Application number: 03250339.3
(22) Date of filing: 20.01.2003
(51) Int. Cl.: G02B 6/00

(54) **Modularized advertising light box**

(71) Applicant: Richway Technology Co., Ltd., Shindian City, Taipei 231 (TW)
(72) Inventor: Hsiao-Ping, Lee, Junghe City, Taipei 235 (TW)
(74) Representative: Calderbank, Thomas Roger

(57) **Abstract**

A modularized advertising light box includes a light guide (70) with a reflecting pane (71), a light guiding pane (72), a diffusive pane (73), a shield frame (80) put on a peripheral edge of the light guide, and at least two light tubes (84) placed inside the shield frame (80). By assembling the light guide (70), the shield frame (80) and the at least two light tubes (84) constitute a backlight module (100) inside an advertising case (90) to allows for being conveniently assembled, replaced and delivered.

## Description

The present invention relates to a modularized advertising light box and, particularly, to an advertising light box with a backlight module and a case that are separated from each other, so that the backlight module can be sold or replaced independently for enhancing convenience of delivery and storage.

Advertising light cases are widely used in signboards of stores, subway stations and airports, mostly having T8 tubes with a straight downward light inlet. These light box cases, however, have the shortcoming of high power consumption and large volumes.

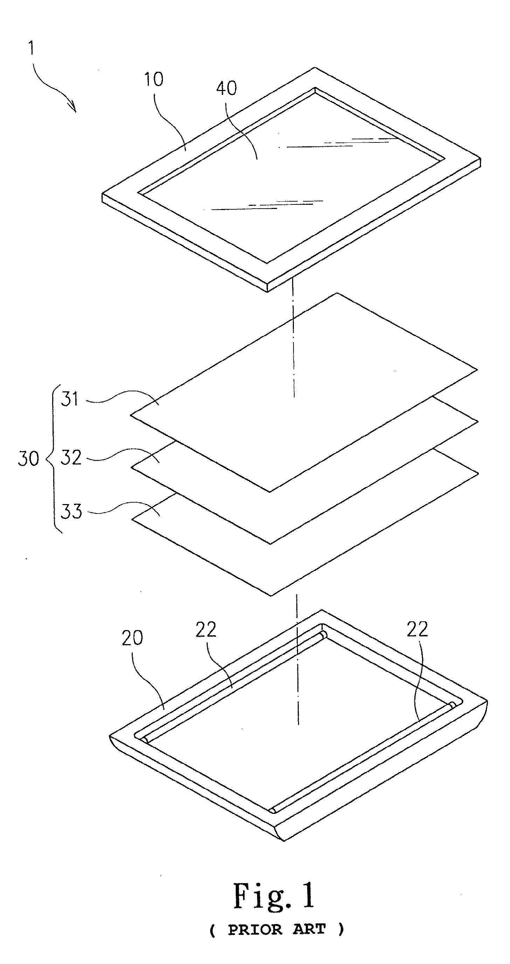

Therefore, currently used super thin advertising light box cases have been designed to have lateral entries for light rather than the straight downward light inlet. As shown in Fig. 1, a conventional advertising light case with this improvement mainly comprises an outer frame 10, a light guide assembly 30, and an inner frame 20. The light guide assembly 30 is composed of a reflecting pane 31, a light guiding pane 32 and a diffusive pane 33, which are stacked on each other and fixed by double-adhesive tapes. The light guide assembly 30 is inserted in the inner frame 20 and light tubes 22 are disposed at two lateral sides of the light guide assembly 30. The light generated from the light tubes 22 enters the light guide assembly 30 and is diffusively deflected to a light pane 40 on the outer frame 10. The light pane 40 carries a picture, which is illuminated and shown.

The preceding design can lead to a reduced volume for the advertising light case but is still hampered by the following defects:
1. It is high for the working time and the material cost of the light guide assembly 30. A great deal of double sided adhesive tapes being used causes the optical filmbeing contaminated and exists optical imperfects such as shining lines and outflow of gluing material easily. Hence, more than two times of working procedures have to be performed so that the production cost becomes increase. Furthermore, the manufacturing process has many variable factors so that it is easy to generate stained powder dust and the rate of goodness is reduced significantly with an inferior quality.
2. Distances of the light entry plane are not stable.
3. Light entering the light guide assembly 30 is not capable of being focused to result in shining lines and light leaking out.
4. The light tubes are not protected from breaking.

Further, an advertising light box shade, which has been disclosed in Taiwan Patent Application No. 89219420, as shown in Figs. 2A and 2B, has an advertising light box 1 with an outer frame 10 and an inner frame 20. A transparent plate 41, inserted between a leaning member 101 and a hook member 102, is held in the outer frame 10. On each of two opposite sides of the inner frame 20, a light tube 22 is inserted between two brackets 21. A light guide 30 is placed between the two light tubes 22 with two ends thereof having an outer shield frame 50 and an inner shield frame 60 respectively. The outer shield frame 50 at an end thereof is fastened to an inner side of the outer frame 10 and the inner shield frame 60 at an end thereof is fastened to a rear side of the light guide 30. Thus, the light tubes 22 are enclosed with the outer shield frame 50 and the inner shield frame 60.

The preceding prior art sill has the following defects:
1. The light guide 30 is formed by gluing layers of double-sided adhesive tapes, which results in many working labors and a high material cost. A great deal of adhesive tapes being used causes the optical film being contaminated and optical imperfects such as shining lines and outflow of gluing material easily. Hence, more than two times of working procedures have to be performed so that the production cost becomes increase. Furthermore, the manufacturing process has many variable factors so that it is easy to generate stained powder dust so that the rate of goodness is reduced significantly with an inferior quality.
2 . All structural parts are joined to form a correlative assembly with the brackets 21 being placed inside the inner frame 20, the light tubes 22 being inserted between the brackets 21, and the outer and the inner shields frames 50, 60 on the light guide 30 surrounding the light tubes 22. Therefore, it is not possible to replace a single defect structural part separately.
3. Since all structural parts forman integral assembly, it is not possible to sell a single structural part separately.
4. It is not possible for the light from the light tubes 22 to enter the light guide assembly 30 in a concentrated way so that it is easy to result in shining lines and light leaking out.
5. Since the inner shield 60 is fixedly fastened to the light guide 30 so that it is easy to cause damage of the light guide 30 in case of disassembling the case 1 and replacing the light tubes 22.

It is desirable for the present invention to provide a modularized advertising light box, which has a separable backlight module from a light box, so that the backlight module can be sold or replaced independently to enhance the convenience of being delivered and stored for meeting demands of economy.

A possible further aim is to provide a modularized advertising light box, which has a light guide being fixed by way of a shield frame enclosing lateral sides thereof and a reflecting pane, a light guiding pane and a diffusive pane thereof are not held by the double-sided adhesive tapes any more, so that the labor and material cost for treating double-sided adhesive tapes can be saved completely during the light box being fabricating.

Another possible aim is to provide an advertising light box, which has a metallic reflection shield frame with a U-shaped cross-section closely surrounding light tubes, so that the light entirely enters the light guide to enhance the illumination and avoid the optical imperfects.

The present invention can be more fully understood by reference to the following description and accompanying drawings, in which:
Fig. 1 is a perspective view of a conventional advertising light case when disassembled;

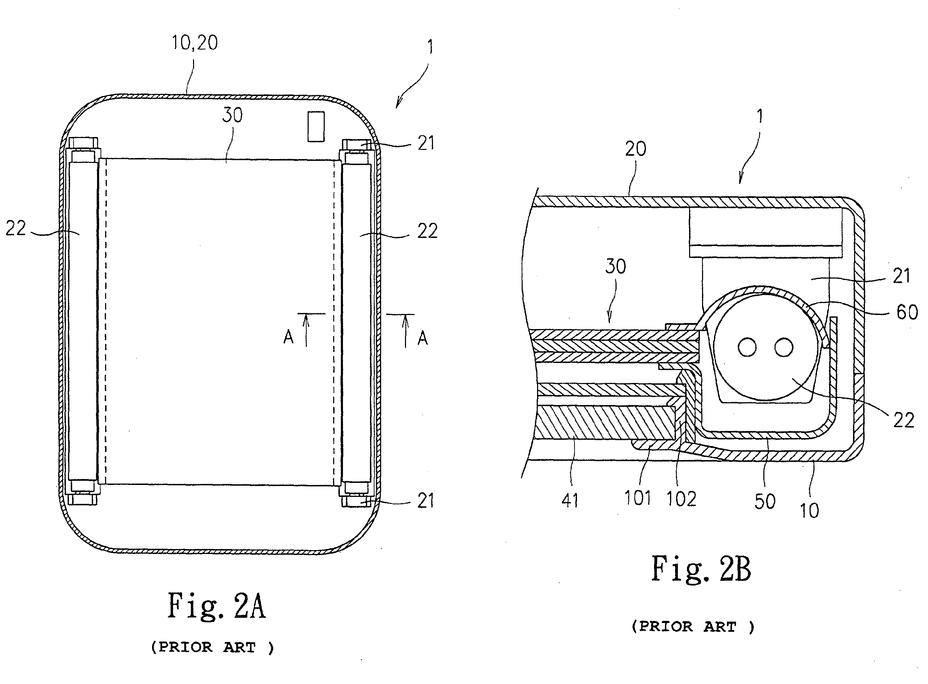

Fig. 2A is a front view of a conventional advertising light shade;
Fig. 2B is a sectional view drawn along line A - A of Fig. 2A;
Fig. 3 is a perspective view of the advertising light assembly of the present invention when disassembled.
Fig. 3A is a sectional view drawn along line B - B of Fig. 3;
Fig. 4 is a perspective view of the backlight source and the case of the present invention;
Fig. 5 is a perspective view of the shield frames and the light guide of the present invention; and
Fig. 6 is a perspective view of the advertising light box of the present invention when assembled.

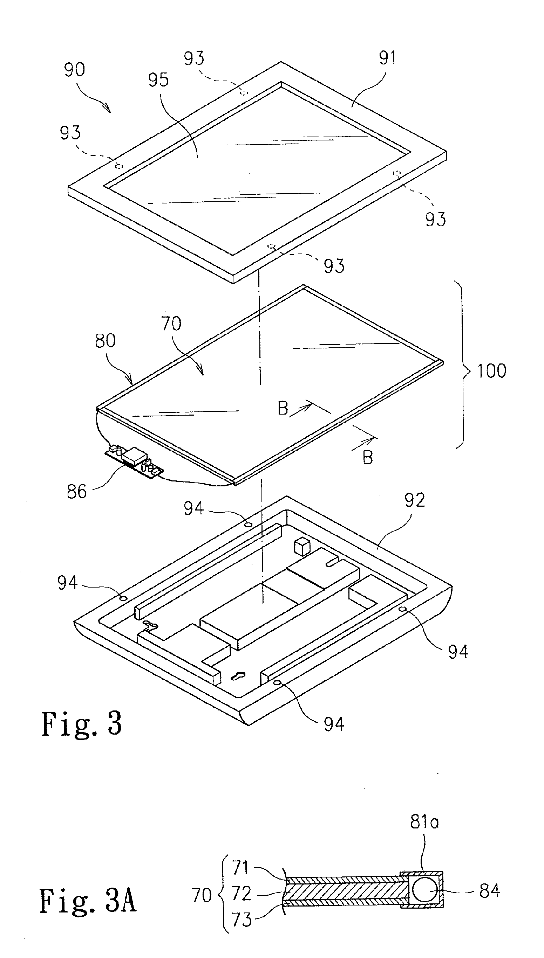

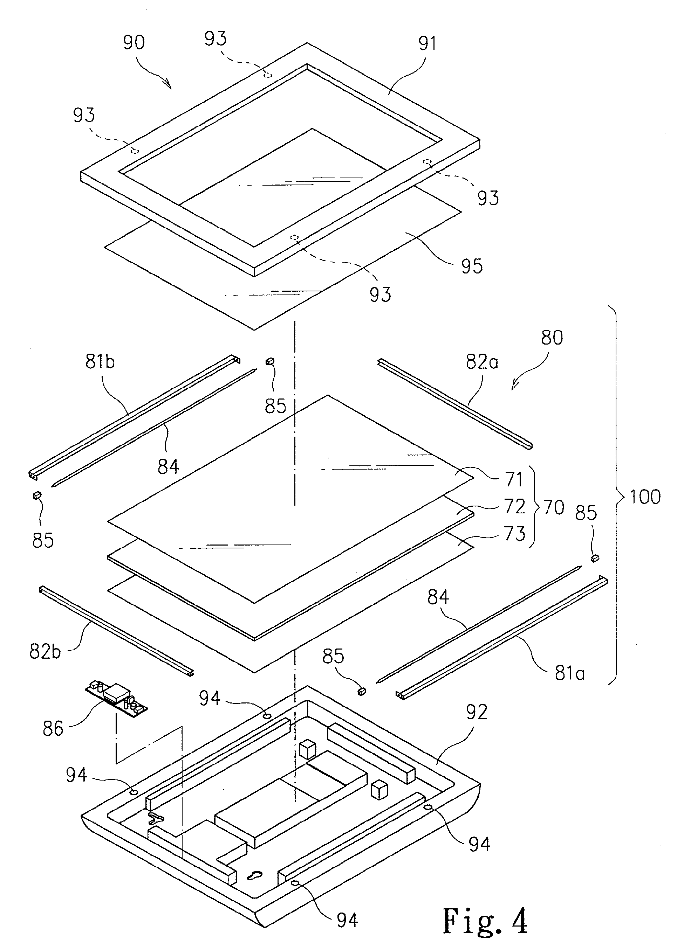

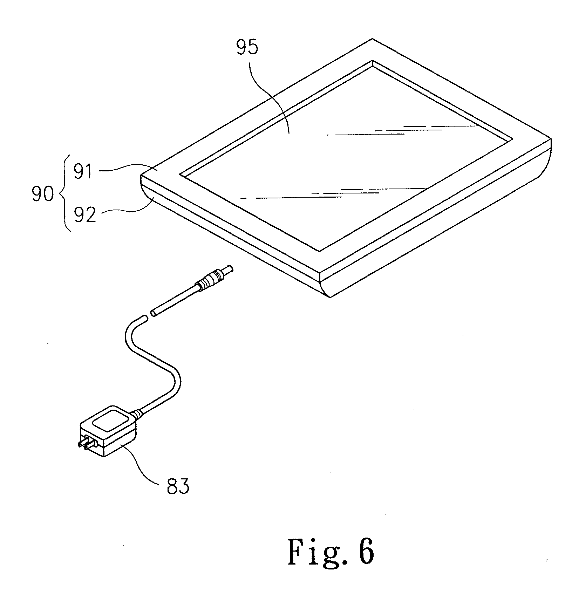

As shown in Figs. 3 - 6, the modularized advertising light box of the present invention mainly includes a light guide 70, a shield frame 80, two light tubes 84, and a case 90.

The light guide 70 includes a reflecting pane 71, a light guiding pane 72 and a diffusive pane 73.

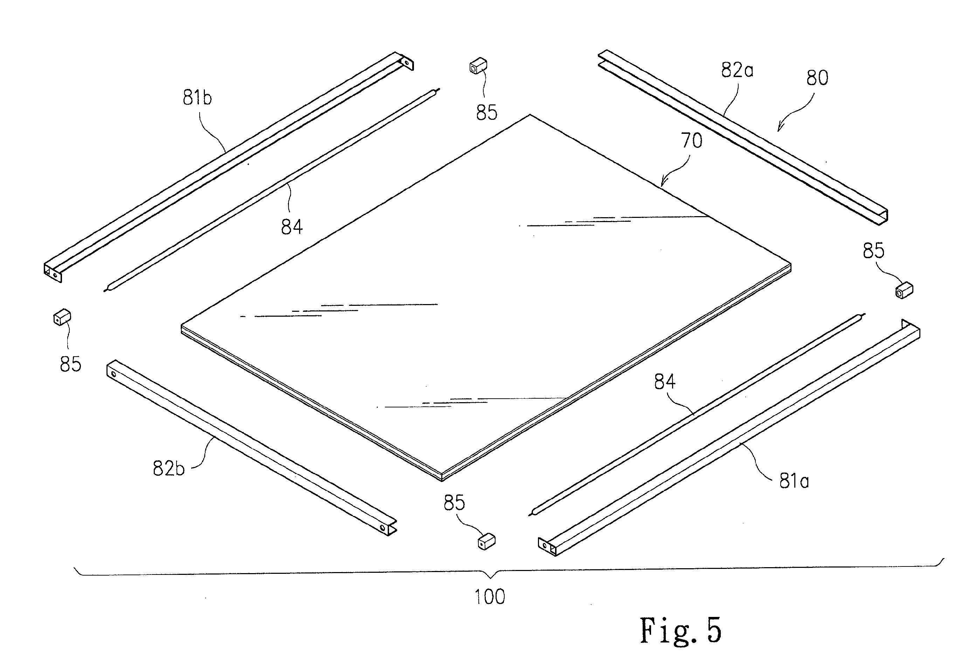

The shield frame 80 surrounds the light guide 70 at a peripheral edge thereof. As shown in Fig. 5, the shield frame 80 has main reflecting bars 81a, 81b with U-shaped cross-sections and auxiliary reflecting bars 82a, 82b with U-shaped cross-sections. Each of the main reflecting bars 81a, 81b surrounds a light tube 84. The light guide 30 on the peripheral edge thereof has light entering surfaces, on which the main reflecting bars 81a, 81b and the auxiliary reflecting bars 82a, 82b are put. The main reflecting bars 81a, 81b are made of metal and the auxiliary reflecting bars 82a, 82b are made of plastics.

The two light tubes 84 are inserted in the main reflecting bars 81a, 81b and placed between brackets 85, which also lie inside the main reflecting bars 81a, 81b. The brackets 85 are supplied by an external power source 83 via a converter 86, causing the light tubes 84 tobe lighted.

The case 90 includes an outer frame 91 and an inner frame 92, carrying permanent magnets 93, 94 on sides that face each other. A light pane 95 is laid in the outer frame 91.

By assembling the light guide 70 and the shield frame 80 with the light tubes 84, a backlight module 100 is created. For assembling the advertising light box of the present invention, the backlight module is laid into the case 90, and the outer and inner frames 91, 92 are joined and held together by the permanent magnets 93, 94. Thus, quick and easy assembly of the present invention is achieved.

As above explanation, the present invention has the following advantages:
1. The backlight module 100 is independent from the case 90 so that the backlight module 100 can be sold and replaced separately to enhance convenience of delivery and storage so as to meet demands of economy.
2. The light guide 70 is fixed by way of the shield frame 80 enclosing lateral sides thereof and a reflecting pane 71, a light guiding pane 71 and a diffusive pane 73 thereof are not held by the double-sided adhesive tapes any more, so that the labor andmaterial cost for treating double-sided adhesive tapes can be saved completely during the light box being fabricating.
3. The metallic reflection bars 81a, 81b of the shield frame 80 with a U-shaped cross-section closely surrounds the light tubes 84, so that the light entirely enters the light guide 70 to enhance the illumination and avoid the optical imperfects.

While the invention has been described with reference to preferred embodiments thereof, it is to be understood that modifications or variations may be easily made without departing from the spirit of this invention which is defined by the appended claims, as interpreted by the description and drawings.

## Claims

1. A modularized advertising light box, comprising:
a light guide, having a reflecting pane, a light guiding pane and a diffusive pane;
a shield frame, being put on a peripheral edge of said light guide; and
at least two light tubes placed inside said shield frame;
wherein, by assembling said light guide, said shield frame and said at least two light tubes, a backlight module is created, which is placed inside an advertising case, to allow for being conveniently assembled, replaced and delivered.

2. The modularized advertising light box according to claim 1, wherein said at least two light tubes are symmetrically placed on two sides of said light guide.

3. The modularized advertising light box according to claim 2, wherein each of said at least two light tubes is inserted between two brackets, which in turn are connected to an external power source via a converter.

4. The modularized advertising light box according to claim 1, wherein said shield frame further comprises two main reflecting bars and two auxiliary reflecting bars.

5. The modularized advertising light box according to claim 4, wherein said two main reflecting bars are made of metal and said two auxiliary reflecting bars are made of plastics.

6. A modularized advertising light box, comprising:
a light guide, having a reflecting pane, a light guiding pane and a diffusive pane;
a shield frame, being put on a peripheral edge of said light guide;
at least two light tubes placed inside said enclosing frame; and
a case, having an outer frame and an inner frame with sides facing each other, in which permanent magnets are laid holding together said outer and inner frames;
wherein, by assembling said light guide, said shield frame and said at least two light tubes, an backlight module is created inside the case to allow for being conveniently assembled, replaced and delivered.

7. The modularized advertising light box according to claim 6, wherein said at least two light tubes are symmetrically placed on two sides of said light guide.

8. The modularized advertising light box according to claim 7, wherein each of said at least two light tubes is inserted between two brackets, which in turn are connected to an external power source via a converter.

9. The modularized advertising light box according to claim 6, wherein said shield frame further comprises two main reflecting bars and two auxiliary reflecting bars.

10. The modularized advertising light box according to claim 9, wherein said two main reflecting bars are made of metal and said two auxiliary reflecting bars are made of plastics.
